(19) Europäisches Patentamt
European Patent Office
Office européen des brevets

(11) **EP 3 318 602 B1**

(12) **EUROPEAN PATENT SPECIFICATION**

(45) Date of publication and mention
of the grant of the patent:
**11.12.2019 Bulletin 2019/50**

(51) Int Cl.:
*C08L 59/00* (2006.01)   *C08K 5/09* (2006.01)
*C08K 5/098* (2006.01)   *C08K 5/13* (2006.01)
*C08K 5/092* (2006.01)   *C08K 5/134* (2006.01)

(21) Application number: **16817506.5**

(22) Date of filing: **02.03.2016**

(86) International application number:
**PCT/JP2016/056389**

(87) International publication number:
**WO 2017/002396 (05.01.2017 Gazette 2017/01)**

(54) **POLYACETAL RESIN COMPOSITION**

POLYACETALHARZZUSAMMENSETZUNG

COMPOSITION DE RÉSINE POLYACÉTAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2015 JP 2015131194**

(43) Date of publication of application:
**09.05.2018 Bulletin 2018/19**

(73) Proprietor: **Polyplastics Co., Ltd.
Tokyo 108-8280 (JP)**

(72) Inventors:
• **MONMA, Tomohiro**
  **Fuji-shi**
  **Shizuoka 416-8533 (JP)**
• **HARASHINA, Hatsuhiko**
  **Fuji-shi**
  **Shizuoka 416-8533 (JP)**

• **TADA, Tomoyuki**
  **Fuji-shi**
  **Shizuoka 416-8533 (JP)**

(74) Representative: **Maiwald Patent- und
Rechtsanwaltsgesellschaft mbH
Elisenhof
Elisenstraße 3
80335 München (DE)**

(56) References cited:
**EP-A1- 0 853 098        EP-A1- 2 098 568
WO-A1-2013/080649    JP-A- S4 849 840
JP-A- S50 145 458        JP-A- 2000 239 484
JP-A- 2010 031 200        JP-A- 2012 107 150
JP-A- 2015 052 028        US-A- 5 096 951**

**Description**

TECHNICAL FIELD

The present invention relates to a polyacetal resin composition.

BACKGROUND ART

Polyacetal resin (also referred to as polyoxymethylene resin, and abbreviated as POM resin) has well balanced mechanical qualities, and is excellent in abrasion- and friction-resistance characteristics, chemical resistance, thermal resistance and electrical characteristics and is therefore widely utilized in the fields of automobiles, electric and electronic articles.

However, required properties in these fields are increasingly becoming more advanced. In order to meet these requirements, a polyacetal resin composition has been proposed which includes a polyacetal resin and a carboxyl group-containing compound having a pKa of 3.6 or more (for example, see Patent Document 1).

There is no particular limitation for the carboxyl group-containing compound as long as it has a pKa of 3.6 or more, and examples thereof include a variety of compounds having a free carboxyl group, for example, aliphatic carboxylic acids, alicyclic carboxylic acids, aromatic carboxylic acids. Aliphatic, alicyclic, and aromatic polyvalent carboxylic acids may be used in a form having at least one carboxyl group such as a dicarboxylic acid monoester (for example, monoethyl maleate, monomethyl fumarate, monoethyl fumarate), a tricarboxylic acid mono- or di-ester, and a tetracarboxylic acid mono-, di-, or tri-ester. Preferred are aliphatic mono- or di-carboxylic acids and aromatic monocarboxylic acids.

The polyacetal resin composition may further include an antioxidant, an alkali metal or alkaline earth metal compound, a stabilizer. Preferred examples of the antioxidant include phenolic antioxidants (in particular, hindered phenols)

Further, it has been proposed that at least one selected from polyalkylene glycols, fatty acid esters, fatty acid amides, fatty acid metal salts can be used as a process stabilizer. As the fatty acid metal salt, a salt of a fatty acid having a carbon number of 10 or more with a metal can be used. A metal having a valence of 1 to 4 (in particular, 1 to 2) is preferred. Usually alkaline earth metal (Mg or Ca) salts are preferably used. Examples of the fatty acid metal salt include magnesium stearate, calcium stearate, zinc stearate, 12-hydroxystearic acid calcium salt.

The polyacetal resin composition according to Patent Document 1 has an advantageous effect in that the thermal stability (particularly the melt stability during molding processing) of the polyacetal resin can be significantly improved. Further, it has another advantageous effect in that the generation of formaldehyde can be reduced to a very low level, leading to significantly improved work environments. Moreover, it has a yet another advantageous effect in that the generation of formaldehyde can be reduced even under harsh conditions to prevent adhesion of decomposition products to a mold (mold deposits), exudation of decomposition products from a molded article, and heat deterioration of a molded article, and thus the quality and moldability of a molded article can be improved.

Further, addition of a fatty acid metal salt as a component of a polyacetal resin composition is known to contribute to improved physical properties of the weld portion of a polyacetal resin molded article (for example, see Patent Document 2). A raw material fatty acid of a fatty acid metal salt is preferably myristic acid, palmitic acid, or stearic acid, and the metal compound used as the raw material of the fatty acid metal salt is preferably a hydroxide, oxide, and chloride of calcium. Examples of preferred fatty acid metal salts include calcium dimyristate, calcium dipalmitate, calcium distearate, calcium (myristate-palmitate), calcium (myristate-stearate), calcium (palmitate-stearate). Among these, the fatty acid metal salt is preferably calcium dipalmitate or calcium distearate.

Patent Document 1: Japanese Unexamined Patent Application, Publication No. 2000-239484
Patent Document 2: Japanese Unexamined Patent Application, Publication No. H11-323076

DISCLOSURE OF THE INVENTION

Problems to be Solved by the Invention

By the way, conventional knowledge states that a component of a polyacetal resin composition can affect the appearance of a molded article. Conventional knowledge also states that a polyacetal resin composition may remain inside a molding machine when the polyacetal resin composition is fed into the molding machine to obtain a polyacetal resin molded article, and this may result in discoloration of the polyacetal resin composition remaining inside the molding machine. In addition, conventional knowledge states that, depending on the component of the polyacetal resin composition, corrosion of a resin molded article may progress when the resin molded article makes contact with machine oil due to insufficient oil resistance (grease resistance) of the resin composition.

Even the polyacetal resin compositions according to Patent Documents 1 and 2 have a room for further improvement in terms of improving the appearance of a molded article, preventing discoloration of the polyacetal resin composition remaining inside a molding machine, and preventing of corrosion due to machine oil, grease.

An object of the present invention is to provide a polyacetal resin composition having higher general versatility in which the generation amount of formaldehyde is reduced to a low level while the appearance of a molded article is improved, and discoloration of the polyacetal resin composition due to retention inside a molding machine is reduced, and corrosion due to machine oil, grease is prevented.

Means for Solving the Problems

After conducting extensive studies to achieve the above object, the present inventors found that the above object can be achieved by using a specific carboxylic acid as an acid component and a specific metal salt as an alkali component. Then the present invention has been completed. More specifically, the present invention can provide the followings.

(1) An embodiment of the present invention is a polyacetal resin composition, including 100 parts by weight of a polyacetal resin (A), 0.01 parts by weight to 0.5 parts by weight of a hindered phenolic antioxidant (B), 0.002 parts by weight to 0.02 parts by weight of an aliphatic carboxylic acid (C) having a carbon number of 4 or more and having 2 or more carboxyl groups, and 0.01 parts by weight to 0.1 parts by weight of a fatty acid calcium salt (D).

(2) Another embodiment of the present invention is the polyacetal resin composition according to (1), in which the molar content of the fatty acid calcium salt (D) / the molar content of the aliphatic carboxylic acid (C), as the molar ratio of the fatty acid calcium salt (D) relative to the aliphatic carboxylic acid (C), is 0.5 to 5.

Effects of the Invention

According to the present invention, the followings can be achieved in a well-balanced manner: reducing the generation amount of formaldehyde to a low level; improving the appearance of a molded article; reducing discoloration of the polyacetal resin composition due to retention inside a molding machine; and prevention of corrosion due to machine oil, grease. Therefore, according to the present invention, a polyacetal resin composition having higher general versatility can be provided.

PREFERRED MODE FOR CARRYING OUT THE INVENTION

Below, specific embodiments of the present invention are explained in detail, but the present invention is not in any way limited by the below embodiments.

<Polyacetal Resin Composition>

The polyacetal resin composition according to the present invention includes a polyacetal resin (A), a hindered phenolic antioxidant (B), a specific aliphatic carboxylic acid (C), and a specific fatty acid calcium salt (D).

[Polyacetal Resin (A)]

As the polyacetal resin (A), either of a polyacetal homopolymer and a polyacetal compolymer where the majority of the main chain is made of an oxymethylene chain may be used. Further, as the base resin, one where a polyacetal is modified by crosslinking or graft copolymerization by a publicly known method may be used, and there is no restriction on the degree of polymerization or the like, provided that it is moldable.

[Hindered Phenolic Antioxidant (B)]

The hindered phenolic antioxidant (B) which may be used in the present invention is not particularly limited, and for example, monocyclic phenolic compounds (for example, 2,6-di-t-butyl-p-cresol), polycyclic hindered phenolic compounds connected by a group comprising a hydrocarbon group or a sulfur atom (for example, 2,2'-methylenebis(4-methyl-6-t-butylphenol), 4,4'-methylenebis(2,6-di-t-butylphenol), 1,1,3-tris(2-methyl-4-hydroxy-5-t-butylphenyl)butane, 4,4'-butylidinebis(3-methyl-6-t-butylphenol), 1,3,5-trimethyl-2,4,6-tris(3,5-di-t-butyl-4-hydroxybenzyl)benzene, 4,4'-thio-bis(3-methyl-6-t-butylphenol), and the like), hindered phenol compounds having an ester group or amide group (for example, n-octadecyl-3-(4'-hydroxy-3',5'-di-t-butylphenyl)propionate, n-octadecyl-2-(4'-hydroxy-3',5'-di-t-buthylphenyl)propionate, 1,6-hexanediol-bis[3-(3,5-di-t-butyl-4-hydroxyphenyl)propionate], triethyleneglycol-bis[3-(3-t-butyl-5-

EP 3 318 602 B1

methyl-4-hydroxyphenyl)propionate], pentaerythritol tetrakis[3-(3-,5-di-t-butyl-4-hydroxyphenyl)propionate], 3,9-bis{2-[3-(3-t-butyl-4-hydroxy-5-methylphenyl)propionyloxy]-1,1-dimethylethyl}-2,4,8,10-tetraoxaspiro[5.5]undecane, 2-t-butyl-6-(3'-t-butyl-5'-methyl-2'-hydroxybenzyl)-4-methylphenylacrylate, 2-[1-(2-hydroxy-3.5-di-t-pentylphenyl)ethyl]-4,6-di-t-pentylphenylacrylate, di-n-octadecyl-3,5-di-t-butyl-4-hydroxybenzylphosphonate, N,N'-hexamethylenebis(3,5-di-t-butyl-4-hydroxy-dihydrocinnamide), N,N'-ethylenebis[3-(3,5-di-t-butyl-4-hydroxyphenyl)propionamide], N,N'-tetramethylenebis[3-(3,5-dit-butyl-4-hydroxyphenyl)propionamide], N,N'-hexamethlyenebis[3-(3,5-di-t-butyl-4-hydroxyphenyl)propionamide], N,N'-ethylenebis[3-(3-t-butyl-5-methyl-4-hydroxyphenyl)propionamide], N,N'-hexamethylenebis[3-(3-t-butyl-5-methyl-4-hydroxyphenyl)propionamide], N,N'-bis[3-(3,5-di-t-butyl-4-hydroxyphenyl)propionyl]hydrazine, N,N'-bis[3-(3-t-butyl-5-methyl-4-hydroxyphenyl)propionyl]hydrazine, 1,3,5-tris(3,5-di-t-butyl-4-hydroxybenzyl)isocyanurate, 1,3,5-tris(4-t-butyl-3-hydroxy-2,6-dimethylbenzyl) isocyanurate may be mentioned.

In the present invention, at least one, or two or more selected from these antioxidants may be used.

In the present invention, the content of the hindered phenolic antioxidant (B) is 0.01 parts by weight to 0.5 part by weight with respect to 100 parts by weight of the polyacetal resin (A), preferably 0.02 parts by weight to 0.4 parts by weight. If the blended amount of the antioxidant (B) is too small, the antioxidant characteristics may be insufficient, and the stability of the polyacetal resin (A) may be insufficient with respect to short term oxidation degradation at high temperatures during molding processing or the like, or with respect to oxidation degradation under long term use at normal temperatures, and therefore is unfavorable. On the other hand, if the blended amount of the (B) antioxidant is excessive, this is not only uneconomical, but may also cause impairment of the mechanical properties of the obtained resin composition.

[Specific aliphatic carboxylic acid (C)]

The polyacetal resin composition according to the present invention includes as an acid component an aliphatic carboxylic acid (C) having a carbon number of 4 or more and having 2 or more carboxyl groups.

To date, it has been proposed that the processing stability of a polyacetal resin can be significantly improved, and generation of formaldehyde can be significantly reduced by adding a carboxyl group-containing compound having a pKa of 3.6 or more. However, no particular limitation has been applied to the carboxyl group-containing compound except for the pKa of 3.6 or more. In addition, it has not been known until disclosed herein that a specific carboxyl group-containing compound can contribute to an improved appearance of a molded article and prevention of discoloration of the polyacetal resin composition remaining inside a molding machine.

The present invention is characterized by that the carboxyl group-containing compound is an aliphatic carboxylic acid having 2 or more carboxyl groups and a carbon number of 4 or more. As used herein, the term "aliphatic" means a noncyclic or cyclic non-aromatic compound, and can represent a concept encompassing linear, branched, and alicyclic (non-aromatic ring) compounds.

Even when a polyacetal resin composition includes a carboxyl group-containing compound, if that carboxyl group-containing compound is aromatic, the generation amount of formaldehyde cannot be reduced as low as it is in the present invention, and it is also inferior compared to the present invention with regards to the appearance of a molded article and discoloration of the polyacetal resin composition due to retention inside a molding machine. Therefore this is not preferred.

Further, monocarboxylic acids have a lower boiling point and poorer compatibility with polyacetal compared to a carboxylic acid having 2 or more carboxyl groups. Even when a polyacetal resin composition includes an aliphatic carboxylic acid, if that aliphatic carboxylic acid is a monocarboxylic acid, due to different boiling points and the compatibility with polyacetal, the generation amount of formaldehyde cannot be reduced as low as it is in the present invention, and the appearance of a molded article is inferior compared to the present invention, even if the amount of the monocarboxylic acid is increased so that the amount of carboxyl groups contained in the monocarboxylic acid falls within the range of the amount of carboxyl groups contained in a preferred amount of a dicarboxylic acid. Therefore, use of an aliphatic monocarboxylic acid as the aliphatic carboxylic acid is not preferred.

Further, even when an aliphatic carboxylic acid contained in a polyacetal resin composition has 2 or more carboxyl groups, if that aliphatic carboxylic acid is ethanedioic acid (oxalic acid, an aliphatic saturated dicarboxylic acid having a carbon number of 2), propanedioic acid (malonic acid, an aliphatic saturated dicarboxylic acid having a carbon number of 3), since the thermal stability of the carboxylic acid itself is poor and the acid strength is very strong, it may promote decomposition of polyacetal. Therefore, this is not preferred.

There is no particular limitation for the aliphatic carboxylic acid as long as it has 2 or more carboxyl group, and it may be an aliphatic dicarboxylic acid, an aliphatic tricarboxylic acid, or an aliphatic tetracarboxylic acid. Further, the aliphatic carboxylic acid may be a monoester of an aliphatic tricarboxylic acid, a monoester of an aliphatic tetracarboxylic acid, or a diester of an aliphatic tetracarboxylic acid.

Moreover, the aliphatic carboxylic acid may be a saturated carboxylic acid, or may be an unsaturated carboxylic acid.

4

Specific examples of the aliphatic saturated dicarboxylic acid having a carbon number of 4 or more include butanedioic acid (succinic acid, an aliphatic saturated dicarboxylic acid having a carbon number of 4), pentanedioic acid (glutaric acid, an aliphatic saturated dicarboxylic acid having a carbon number of 5), hexanedioic acid (adipic acid, an aliphatic saturated dicarboxylic acid having a carbon number of 6), heptanedioic acid (pimelic acid, an aliphatic saturated dicarboxylic acid having a carbon number of 7), octanedioic acid (suberic acid, cork acid, an aliphatic saturated dicarboxylic acid having a carbon number of 8), nonanedioic acid (azelaic acid, an aliphatic saturated dicarboxylic acid having a carbon number of 9), decanedioic acid (sebacic acid, an aliphatic saturated dicarboxylic acid having a carbon number of 10), undecanedioic acid (an aliphatic saturated dicarboxylic acid having a carbon number of 11), and dodecanedioic acid (an aliphatic saturated dicarboxylic acid having a carbon number of 12).

Moreover, specific examples of the aliphatic unsaturated dicarboxylic acid having a carbon number of 4 or more include butenedioic acid (fumaric acid, an aliphatic unsaturated dicarboxylic acid having a carbon number of 4), pentenedioic acid (glutaconic acid, an aliphatic unsaturated dicarboxylic acid having a carbon number of 5), hexenedioic acid (dihydromuconic acid, an aliphatic unsaturated dicarboxylic acid having a carbon number of 6), octenedioic acid (an aliphatic unsaturated dicarboxylic acid having a carbon number of 8), decenedioic acid (an aliphatic unsaturated dicarboxylic acid having a carbon number of 10), undecenedioic acid (an aliphatic unsaturated dicarboxylic acid having a carbon number of 11), and dodecenedioic acid (an aliphatic unsaturated dicarboxylic acid having a carbon number of 12).

Specific examples of the aliphatic tricarboxylic acid having a carbon number of 4 or more include 2-hydroxypropane-1,2,3-tricarboxylic acid (citric acid). Specific examples of the aliphatic tetracarboxylic acid having a carbon number of 4 or more include ethylenetetracarboxylic acid.

In the present invention, the blended amount of the component (C) is 0.002 parts by weight to 0.02 parts by weight relative to 100 parts by weight of the polyacetal resin (A). The blended amount of the component (C) is preferably 0.005 parts by weight to 0.02 parts by weight. If the blended amount of the component (C) is too little, it not preferred because the thermal stability may not be sufficiently conferred on the polyacetal resin (A), and this may be responsible for generation of formaldehyde due to resin decomposition during processing. On the other hand, if the blended amount of the component (C) is excessive, it is not preferred because the resulting resin composition may have insufficient oil resistance (grease resistance), and corrosion of a resin molded article may progress when the resin molded article makes contact with machine oil, grease.

[Fatty acid calcium salt (D)]

The polyacetal resin composition according to the present invention includes the fatty acid calcium salt (D) as an alkali component.

To date, it has been proposed that at least one selected from polyalkylene glycols, fatty acid esters, fatty acid amides, fatty acid metal salts can be used as a process stabilizer. Further, it has been proposed that when a fatty acid metal salt is added as a component of a polyacetal resin composition, the physical properties of the weld portion of a polyacetal resin molded article can be improved, and fatty acid calcium salt is preferred among fatty acid metal salts. However, it has not been known until disclosed herein that the type of the metal which constitutes a fatty acid metal salt contributes to the generation amount of formaldehyde, the appearance of a molded article, and the prevention of discoloration of the polyacetal resin composition inside a molding machine, in addition to the physical properties of a weld portion.

The present invention is characterized by that, among fatty acid metal salts, the metal constituting the fatty acid metal salt is calcium. Even when a polyacetal resin composition includes a fatty acid metal salt, if that the metal which constitutes the fatty acid metal salt is sodium, the generation amount of formaldehyde cannot be reduced as low as it is in the present invention, and it also is inferior compared to the present invention with regards to the appearance of a molded article and the discoloration of the polyacetal resin composition due to retention inside a molding machine. Therefore this is not preferred.

Moreover, if the metal constituting a fatty acid metal salt is magnesium, it is not preferred because the polyacetal resin composition may be discolored due to retention inside a molding machine.

A raw material fatty acid for the fatty acid calcium salt may be a saturated fatty acid, or an unsaturated fatty acid, or a fatty acid substituted with a hydroxyl group. Moreover, the raw material fatty acid may be a dicarboxylic acid, or an oxocarboxylic acid, or a derivative of a carboxylic acid.

Saturated fatty acids include ethanoic acid (acetic acid, carbon number: 2), propanoic acid (propionic acid, carbon number: 3), butanoic acid (butyric acid, carbon number: 4), pentanoic acid (valeric acid, carbon number: 5), hexanoic acid (caproic acid, carbon number: 6), heptanoic acid (enanthic acid, carbon number: 7), octanoic acid (caprylic acid, carbon number: 8), nonanoic acid (pelargonic acid, carbon number: 9), decanoic acid (capric acid, carbon number: 10), dodecanoic acid (lauric acid, carbon number: 12), tetradecanoic acid (myristic acid, carbon number: 14), hexadecanoic acid (palmitic acid, carbon number: 16), heptadecanoic acid (margaric acid: carbon number: 17), octadecanoic acid (stearic acid: carbon number : 18).

Unsaturated fatty acids include sorbic acid (carbon number: 6), oleic acid (carbon number: 18), linolic acid (carbon number: 18), linolenic acid (carbon number: 18), arachidonic acid (carbon number: 20), eicosapentaenoic acid (carbon number: 20), docosahexaenoic acid (carbon number: 22).

Aliphatic dicarboxylic acids include ethanedioic acid (oxalic acid, carbon number: 2), propanedioic acid (malonic acid, carbon number: 3), butanedioic acid (succinic acid, carbon number: 4), pentanedioic acid (glutaric acid, carbon number: 5), hexanedioic acid (adipic acid, carbon number: 6), heptanedioic acid (pimelic acid, carbon number: 7), octanedioic acid (suberic acid or cork acid, carbon number: 8), nonanedioic acid (azelaic acid, carbon number: 9), decanedioic acid (sebacic acid, carbon number: 10), undecanedioic acid (carbon number: 11), dodecanedioic acid (carbon number: 12).

Aliphatic oxocarboxylic acids include 2-oxopropane acid (pyruvic acid, carbon number: 3).

Derivatives of aliphatic carboxylic acids include aconitic acid (carbon number: 6).

In the present invention, there is no particular limitation for the number of fatty acid calcium salts, but two or more fatty acid calcium salts may be added at the same time. For example, calcium stearate and calcium palmitate may be added at the same time, or a metal salt including fatty acids having different carbon numbers, for example, calcium (palmitate-stearate) may be mixedly present.

In the present invention, the blended amount of the component (D) is 0.01 parts by weight to 0.1 parts by weight relative to 100 parts by weight of the polyacetal resin (A). The blended amount of the component (D) is preferably 0.02 parts by weight to 0.08 parts by weight. A less blended amount of the component (D) is not preferred because the resulting resin composition may have insufficient oil resistance (grease resistance), and corrosion of a resin molded article may progress when the resin molded article makes contact with machine oil or grease. On the other hand, an excessive blended amount of the component (D) is not preferred because the thermal stability may not be sufficiently conferred on the polyacetal resin (A), and this may be responsible for generation of formaldehyde due to resin decomposition during processing. Further, it is not preferred because the polyacetal resin composition may be discolored due to retention inside a molding machine.

[Molar ratio of component (D) to component (C)]

Although not an essential embodiment, the molar content of the fatty acid calcium salt (D) / the molar content of the aliphatic carboxylic acid (C) as the molar ratio of the fatty acid calcium salt (D) relative to the aliphatic carboxylic acid (C) is preferably 0.5 to 5, more preferably 0.7 to 4.

The molar ratio being too small means that the amount of the component (C) is too large, or the amount of the (D) component is too small. Therefore, a too small value of the above molar ratio is not preferred because the resulting resin composition may have insufficient oil resistance (grease resistance), and corrosion of a resin molded article may progress when the resin molded article makes contact with machine oil or grease.

The molar ratio being too large means that the amount of the component (C) is too small, or the amount of the (D) component is too large. Therefore, a too large value of the above molar ratio is not preferred because the thermal stability may not be sufficiently conferred on the polyacetal resin (A), and this may be responsible for generation of formaldehyde due to resin decomposition during processing. Further, it is not preferred because the polyacetal resin composition may be discolored due to retention inside a molding machine.

[Other Components]

The polyacetal resin composition may also comprise other components as necessary. One or two publicly known stabilizers may be added to the polyacetal resin composition as long as the objective and the effects of the present invention are not interfered. Further, as long as it does not interfere with the objective and the effects of the present invention, it is possible to add as required, one or two or more common additives for thermoplastic resins, for example, a colorant such as a dye, a pigment or the like, a lubricant, a mold release agent, an antistatic agent, a surfactant, or a filler such as an organic polymer, or an inorganic or organic fibrous, particulate or plate-shaped filler.

[Preparation of the Polyacetal Resin Composition]

For the preparation of the polyacetal resin composition according to the present invention, it may be easily prepared by a well-known method typically used as a conventional resin composition preparation method. For example, (1) a method of blending all of the components constituting the composition, feeding this to an extruder and melt kneading to obtain the composition in the form of pellets, (2) a method of feeding a part of the components constituting the composition from a main feed port of an extruder, feeding the remaining components from a side feed port, and melt kneading to obtain the composition in the form of pellets, (3) a method of preparing pellets having different compositions by extrusion or the like first, and blending these pellets to adjust to a predetermined composition, or the like may be adopted.

EXAMPLES

Below, the present invention is specifically explained by examples, but the present invention is not limited to these examples.

< Example and Comparative Example>

[Table 1]

| | | | Example | | | | | | |
|---|---|---|---|---|---|---|---|---|---|
| | | | 1 | 2 | 3 | 4 | 5 | 6 | 7 |
| A | | Polyacetal resin (MI=9g/10min) | 100 | 100 | 100 | 100 | 100 | 100 | 100 |
| B | | Hindered phenolic antioxidant | 0.3 | 0.3 | 0.3 | 0.3 | 0.3 | 0.3 | 0.3 |
| C | C-1 | Adipic acid (Carbon number:6) | 0.006 | | | | | | 0.006 |
| | C-2 | Decanedioic acid (Carbon number:10) | | 0.008 | | | | | |
| | C-3 | Dodecanedioic acid (Carbon number:12) | | | 0.009 | 0.009 | 0.009 | 0.009 | |
| C' | C'-1 | Caproic acid (Carbon number: 6) | | | | | | | |
| | C'-2 | Capric acid (Carbon number: 10) | | | | | | | |
| | C'-3 | Stearic acid (Carbon number: 18) | | | | | | | |
| C" | C"-1 | Oxalic acid (Carbon number:2) | | | | | | | |
| C" | C"-2 | Malonic acid (Carbon number: 3) | | | | | | | |
| C'" | C'"-1 | Phthalic acid (Aromatic carboxylic acid) | | | | | | | |
| | D-1 | Calcium acetate | | | | | | 0.006 | 0.006 |
| | D-2 | Calcium laurate | | | | 0.02 | | | |
| D | D-3 | Calcium stearate | 0.02 | 0.02 | 0.02 | | | | |
| | D-4 | Calcium behenate | | | | | 0.02 | | |
| D' | D'-1 | Sodium stearate | | | | | | | |
| | D'-2 | Magnesium stearate | | | | | | | |
| Molar ratio of component (D) to component (C) | | | 0.80 | 0.83 | 0.84 | 1.17 | 0.71 | 0.97 | 0.92 |
| Appearance of molded article [Flow mark] | | | 1 | 1 | 1 | 1 | 1 | 1 | 1 |
| Degree of discoloration after melt retention | | | 0.64 | 0.55 | 0.55 | 0.60 | 0.49 | 0.50 | 0.50 |
| Grease resistance | | | ○ | ○ | ○ | ○ | ○ | ○ | ○ |
| Generation amount of formaldehyde [μg/g] | | | 18 | 22 | 21 | 25 | 17 | 20 | 17 |

(Unit: parts by weight)

[Table 2]

| | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| | A | Polyacetal resin (MI=9g/10min) | 100 | 100 | 100 | 100 | 100 | 100 | 100 | 100 | 100 | 100 |
| | B | Hindered phenolic antioxidant | 0.3 | 0.3 | 0.3 | 0.3 | 0.3 | 0.3 | 0.3 | 0.3 | 0.3 | 0.3 |
| C | C-1 | Adipic acid (Carbon number:6) | | | | | | | | | | |
| | C-2 | Decanedioic acid (Carbon number:10) | | | | | | | | | | |
| | C-3 | Dodecanedioic acid (Carbon number:12) | | | | | | | 0.009 | | | |
| C' | C'-1 | Caproic acid (Carbon number:6) | 0.005 | 0.01 | | | | | | | | |
| | C'-2 | Capric acid (Carbon number:10) | | | 0.007 | 0.014 | | | | | | |
| | C'-3 | Stearic acid (Carbon number:18) | | | | | 0.012 | 0.024 | | | | |
| C" | C"-1 | Oxalic acid (Carbon number:2) | | | | | | | | 0.006 | | |
| C" | C"-2 | Malonic acid (Carbon number:3) | | | | | | | | | 0.006 | |
| C'" | C'"-1 | Phthalic acid (Aromatic carboxylic acid) | | | | | | | | | | 0.006 |
| | D-1 | Calcium acetate | | | | | | | 0.06 | | | |
| | D-2 | Calcium laurate | | | | | | | | | | |
| D | D-3 | Calcium stearate | 0.02 | 0.02 | 0.02 | 0.02 | 0.02 | 0.02 | | 0.02 | 0.02 | 0.02 |
| | D-4 | Calcium behenate | | | | | | | | | | |
| D' | D'-1 | Sodium stearate | | | | | | | | | | |
| | D'-2 | Magnesium stearate | | | | | | | | | | |
| Molar ratio of component (D) to component (C) | | | 0.77 | 0.38 | 0.81 | 0.41 | 0.78 | 0.39 | 9.71 | 0.49 | 0.57 | 0.91 |
| Appearance of molded article [Flow mark] | | | 2 | 3 | 2 | 3 | 2 | 3 | 1 | 3 | 3 | 2 |
| Degree of discoloration after melt retention | | | - | - | - | - | - | - | 0.89 | - | - | - |
| Grease resistance | | | - | - | - | - | - | - | ○ | - | - | - |
| Generation amount of formaldehyde [μg/g] | | | 52 | 45 | 54 | 48 | 50 | 47 | 70 | 100< | 100< | 100< |

(Unit: parts by weight)

EP 3 318 602 B1

[Table 3]

| | | | Comparative Example | | | | | | | | | |
|---|---|---|---|---|---|---|---|---|---|---|---|---|
| | | | 11 | 12 | 13 | 14 | 15 | 16 | 17 | 18 | 19 | 20 |
| A | | Polyacetal resin (MI=9g/10min) | 100 | 100 | 100 | 100 | 100 | 100 | 100 | 100 | 100 | 100 |
| B | | Hindered phenolic antioxidant | 0.3 | 0.3 | 0.3 | 0.3 | 0.3 | 0.3 | 0.3 | 0.3 | 0.3 | 0.3 |
| C | C-1 | Adipic acid (Carbon number:6) | 0.006 | 0.006 | | | 0.025 | 0.001 | 0.006 | 0.006 | 0.004 | 0.006 |
| | C-2 | Decanedioic acid (Carbon number:10) | | | | | | | | | | |
| | C-3 | Dodecanedioic acid (Carbon number:12) | | | 0.009 | 0.009 | | | | | | |
| C' | C'-1 | Caproic acid (Carbon number:6) | | | | | | | | | | |
| | C'-2 | Capric acid (Carbon number:10) | | | | | | | | | | |
| | C'-3 | Stearic acid (Carbon number:18) | | | | | | | | | | |
| C" | C"-1 | Oxalic acid (Carbon number:2) | | | | | | | | | | |
| C" | C"-2 | Malonic acid (Carbon number:3) | | | | | | | | | | |
| C'" | C'"-1 | Phthalic acid (Aromatic carboxylic acid) | | | | | | | | | | |
| | D-1 | Calcium acetate | | | | | | | | | | |
| | D-2 | Calcium laurate | | | | | | | | | | |
| D | D-3 | Calcium stearate | | | | | 0.02 | 0.02 | 0.2 | 0.002 | 0.1 | 0.01 |
| | D-4 | Calcium behenate | | | | | | | | | | |
| D' | D'-1 | Sodium stearate | 0.01 | | 0.01 | | | | | | | |
| | D'-2 | Magnesium stearate | | 0.02 | | 0.02 | | | | | | |
| Molar ratio of component (D) to component (C) | | | 0.80 | 0.82 | 0.84 | 0.87 | 0.19 | 4.81 | 8.02 | 0.08 | 6.02 | 0.40 |
| Appearance of molded article [Flow mark] | | | 2 | 1 | 2 | 1 | 1 | 1 | 1 | 1 | 1 | 1 |
| Degree of discoloration after melt retention | | | - | 2.15 | - | 2.23 | 0.44 | 0.48 | 1.63 | 0.42 | 1.49 | 0.54 |
| Grease resistance | | | - | - | - | - | × | ○ | ○ | × | ○ | × |
| Generation amount of formaldehyde [$\mu$g/g] | | | 100< | 23 | 100< | 20 | 18 | 58 | 61 | 18 | 55 | 20 |

(Unit: parts by weight)

EP 3 318 602 B1

Each of the components in Tables 1 to 3 is as follows.

Polyacetal resin (A)

A polyacetal copolymer (melt index (measured at 190°C, load 2160 g): 9 g/10 min) made by copolymerizing 96.7 weight% trioxane and 3.3 weight% 1,3-dioxolane.

Hindered phenolic antioxidant (B)

Product name: Irganox 245, triethylene glycol-bis[3-(3-t-butyl-5-methyl-4-hydroxyphenyl)propionate], manufactured by BASF. Aliphatic carboxylic acid (C) having a carbon number of 4 or more and having 2 or more carboxyl groups

   Adipic acid (C-1) (carbon number: 6)
   Decanedioic acid (C-2) (carbon number: 10)
   Dodeanedioic acid (C-3) (carbon number: 12)

Aliphatic monocarboxylic acid (C') having one carboxyl groups

   Caproic acid (C'-1) (carbon number: 6)
   Capric acid (C'-2) (carbon number: 10)
   Stearic acid (C'-3) (carbon number: 18)

Aliphatic carboxylic acid (C") having a carbon number of 3 or less and having 2 or more carboxyl groups

   Oxalic acid (C"-1) (carbon number: 2)
   Malonic acid (C"-2) (carbon number: 3)

Aromatic carboxylic acid (C''') having a carbon number of 4 or more and having 2 or more carboxyl groups
Phthalic acid (C'''-1) (carbon number: 8)
Fatty acid calcium salt (D)

   Calcium acetate (D-1)
   Calcium laurate (D-2)
   Calcium stearate (D-3)
   Calcium behenate (D-4)

Metal salt of other than calcium (D')

   Sodium stearate (D'-1)
   Magnesium stearate (D'-2)

[Preparation of the Polyacetal Resin Composition]

The components disclosed in Tables 1 to 3 were blended in the proportions disclosed in Tables 1 to 3, and by melt-kneading in a twin screw extruder at 210°C, the polyacetal resin compositions in pellet form of the Examples and Comparative Examples were obtained.

[Evaluation]

In order to evaluate pellet-like polyacetal resin compositions according to Examples and Comparative Examples, the followings were evaluated: the appearance of a molded article, discoloration due to retention inside a molding machine, grease resistance, and the generation amount of formaldehyde.

[Appearance of molded article]

Evaluation of surface appearance: a 50 mm x 50 mm plate with a thickness of 3 mm which had a single pin gate with φ 1.5 mm at the center was injection molded using an injection molding machine "J75SS2A" (φ 35) from Japan Steel Works, Ltd. The resulting molded article was subjected to evaluation of surface appearance in terms of two evaluation points: (1) the size (mm) of a flow mark near the gate and (2) visual evaluation of surface roughness. For (1), a smaller flow mark is better, which was evaluated by categorizing flow marks into 3 ranks of 1 to 3. That is, 1 means good, and 2 means slightly poor, and 3 means poor. Results are shown in Tables 1 to 3.

(Molding conditions)

Cylinder temperature: 200-200-180-150°C
Mold temperature: 90°C
Dwell pressure: 750 kg/cm$^2$

(Injection conditions)

Injection time: 5 seconds
Measurement (primary-secondary-dwelling): 25-20-8 mm
Speed (primary-secondary): 25-2.5 mm/sec

[Degree of discoloration after melt retention]

Plates with dimensions of 70 mm x 50 mm x 3 mm were molded with polyacetal resin compositions prepared from Examples and Comparative Examples under the following two conditions, and the hue (L, a, b) of each molded article was measured with a color sensor Z300A (Nippon Denshoku Industries Co., Ltd.). Subsequently, the degree of discoloration ($\Delta E$) after melt retention was calculated. Results are shown in Tables 1 to 3.

(Common molding conditions)

Injection molding machine: "SE100DU" from Sumitomo Heavy Industries, Ltd. Cylinder temperature: 210°C (from the feeding section to the nozzle)
Mold temperature: 92°C
Injection speed: 1 m/min

(Variable molding conditions)

Molding condition 1: molding was performed according to a molding cycle of 40 seconds without retention of a melt resin inside a cylinder.
Molding condition 2: molding was performed after retention of a melt resin inside a cylinder for 30 minutes.

(Calculation of degree of discoloration ($\Delta E$) after melt retention)

The degree of discoloration ($\Delta E$) after melt retention was calculated using the following equation.

$$\Delta E = \{(L_1 - L_0)^2 + (a_1 - a_0)^2 + (b_1 - b_0)^2\}^{1/2}$$

Here, $L_1$, $a_1$, and $b_1$ show the hue of a molded article according the molding condition 2 (after melt retention for 30 minutes), and $L_0$, $a_0$, and $b_0$ represent the hue of a molded article according the molding condition 1.

[Effects of grease composition on thermal lifetime of polyacetal resin molded article]

ISO dumbbell test pieces were molded by the injection molding method using the polyacetal resin compositions prepared from Examples and Comparative Examples to evaluate effects of a grease composition on a thermal lifetime of the resulting polyacetal resin molded articles. Then, the tensile strength of each dumbbell test piece was measured by a method according to ISO527-1. This measured value was taken as the initial tensile strength.
Further, similar dumbbell test pieces were manufactured, and a grease composition (product name: Molykote® YM102, Dow Corning Toray Co., Ltd.) was applied to these test pieces. The test pieces on which the grease composition had been applied were heated under conditions of 120°C and 20 days. The tensile strength of each dumbbell test piece after heating was measured by the method according to ISO527-1. This measured value was taken as the tensile strength (after 20 days). Then, the tensile strength retention percentage (tensile strength (after 20 days) / initial tensile strength) x 100) which was computed from the tensile strength (after 20 days) and the initial tensile strength was calculated. A case of the tensile strength retention percentage of 80% or more was considered "Good" while a case of less than 80% was considered "Bad." Results are shown in Tables 1 to 3.

[Amount of formaldehyde generated from melt]

After accurately weighing 5 g of pellets, and retained in a metal container at 200°C for 5 minutes, the atmosphere in the container was allowed to be absorbed in distilled water. The amount of formaldehyde in the aqueous solution was quantified according to JISK0102,29. (the section of formaldehyde), and the amount (ppm) of formaldehyde gas developed from the pellets was computed. Results are shown in Tables 1 to 3.

[Results]

Polyacetal resin compositions including the components (A) to (D) in appropriate ranges can simultaneously achieve the followings: the amount of formaldehyde generated from a molded article is reduced to a low level; the appearance of the molded article is improved; discoloration of the polyacetal resin composition due to retention inside a molding machine is reduced; and corrosion due to machine oil or grease is prevented (Examples 1 to 7). Therefore, the polyacetal resin compositions form Examples can be considered to have very high general versatility.

In contrast, with regard to the component (C), even when a polyacetal resin composition includes an aliphatic carboxylic acid, if that carboxylic acid is a monocarboxylic acid, the generation amount of formaldehyde cannot be reduced to a low level, and the appearance of a molded article is also inferior (Comparative Examples 1 to 6).

Further, with regard to the component (C), even when a polyacetal resin composition includes an aliphatic carboxylic acid, if that aliphatic carboxylic acid has a carbon number of less than 4, the generation amount of formaldehyde cannot be reduced, and the appearance of a molded article is also inferior (Comparative Examples 8 and 9).

Moreover, even when a polyacetal resin composition includes a dicarboxylic acid, if that dicarboxylic acid is an aromatic compound, the generation amount of formaldehyde cannot be reduced to a level as low as it is in the present invention, and the appearance of a molded article is also inferior (Comparative Example 10).

Moreover, with regard to the component (D), even when a polyacetal resin composition includes a fatty acid metal salt, if the metal in the fatty acid metal salt is sodium, the generation amount of formaldehyde cannot be reduced to a low level, and the appearance of a molded article is also inferior (Comparative Examples 11 and 13). Moreover, when the metal in a fatty acid metal salt is magnesium, the polyacetal resin composition undergoes discoloration due to retention inside a molding machine (Comparative Examples 12 and 14).

With regard to the component (C), when the blended amount of the component (C) is excessive, the resulting resin composition has insufficient oil resistance (grease resistance), and corrosion of a resin molded article progresses when the resin molded article makes contact with machine oil or grease (Comparative Example 15). Further, when the blended amount of the component (C) is small, the thermal stability cannot be sufficiently conferred on the polyacetal resin (A), and this is responsible for generation of formaldehyde due to resin decomposition during processing (Comparative Example 16).

With regard to the component (D), when the blended amount of the component (D) is excessive, the thermal stability cannot be sufficiently conferred on the polyacetal resin (A), and this is responsible for generation of formaldehyde to resin decomposition during processing. Moreover, the polyacetal resin composition undergoes discoloration due to retention inside a molding machine (Comparative Example 17) . When the blended amount of the component (D) is small, the resulting resin composition has insufficient oil resistance (grease resistance), and corrosion of a resin molded article progresses when the resin molded article makes contact with machine oil or grease (Comparative Example 18).

With regard to the molar ratio of the component (D) to the component (C), when the molar ratio is too large, the thermal stability cannot be sufficiently conferred on the polyacetal resin (A), and this is responsible for generation of formaldehyde due to resin decomposition during processing. Moreover, the polyacetal resin composition may undergoe discoloration due to retention inside a molding machine (Comparative Examples 17 and 19). When the molar ratio is too small, the resulting resin composition has insufficient oil resistance (grease resistance), and corrosion of a resin molded article progresses when the resin molded article makes contact with machine oil or grease (Comparative Examples 18 and 20).

**Claims**

1.  A polyacetal resin composition, comprising: 100 parts by weight of a polyacetal resin (A);

0.01 parts by mass to 0.5 part by mass of a hindered phenolic antioxidant (B);
0.002 parts by weight to 0.02 parts by weight of an aliphatic carboxylic acid (C) having a carbon number of 4 or more and having 2 or more carboxyl groups; and
0.01 parts by weight to 0.1 parts by weight of a fatty acid calcium salt (D).

2. The polyacetal resin composition according to claim 1, wherein the molar content of the fatty acid calcium salt (D) / the molar content of the aliphatic carboxylic acid (C) as the molar ratio of the fatty acid calcium salt (D) relative to the aliphatic carboxylic acid (C) is 0.5 to 5.

**Patentansprüche**

1. Polyacetalharz-Zusammensetzung, umfassend: 100 Gewichtsteile eines Polyacetalharzes (A);

   0,01 Massenteile bis 0,5 Massenteile eines gehinderten phenolischen Antioxidans (B);
   0,002 Gewichtsteile bis 0,02 Gewichtsteile einer aliphatischen Carbonsäure (C) mit einer Kohlenstoffzahl von 4 oder mehr und mit 2 oder mehr Carboxylgruppen; und
   0,01 Gewichtsteile bis 0,1 Gewichtsteile eines Fettsäure-Calciumsalzes (D).

2. Polyacetalharz-Zusammensetzung nach Anspruch 1,
   wobei der Molgehalt des Fettsäure-Calciumsalzes (D) / der Molgehalt der aliphatischen Carbonsäure (C) als das Molverhältnis des Fettsäure-Calciumsalzes (D) relativ zur aliphatischen Carbonsäure (C) 0,5 bis 5 beträgt.

**Revendications**

1. Composition de résine de polyacétal, comprenant :

   100 parties en poids d'une résine de polyacétal (A) ;
   0,01 partie en masse à 0,5 partie en masse d'un anti-oxydant phénolique encombré (B) ;
   0,002 partie en poids à 0,02 partie en poids d'un acide carboxylique aliphatique (C) possédant un nombre de carbone de 4 ou plus et possédant 2 groupes carboxyle ou plus ; et
   0,01 partie en poids à 0,1 partie en poids d'un sel de calcium d'acide gras (D).

2. Composition de résine de polyacétal selon la revendication 1, la teneur en moles du sel de calcium d'acide gras (D) / la teneur en moles de l'acide carboxylique aliphatique (C) comme le rapport molaire du sel de calcium d'acide gras (D) par rapport à l'acide carboxylique aliphatique (C) étant de 0,5 à 5.

**REFERENCES CITED IN THE DESCRIPTION**

**Patent documents cited in the description**

- JP 2000239484 A

- JP H11323076 B